# EUROPÄISCHE PATENTANMELDUNG

(11) **EP 3 142 246 A1**
(43) Veröffentlichungstag der Anmeldung: **15.03.2017**
(21) Anmeldenummer: 15184476.8
(22) Anmeldetag: 09.09.2015
(51) Int. Cl.: H02P 23/04

(54) **VERFAHREN ZUM BETREIBEN EINES ELEKTRISCHEN ANTRIEBS**

(71) Anmelder: Siemens Aktiengesellschaft, 80333 München (DE)
(72) Erfinder: Werner, Ulrich, 91088 Bubenreuth (DE)

(57) **Zusammenfassung**

Die Erfindung betrifft ein Verfahren zum Betreiben eines elektrischen Antriebs (1), wobei der elektrische Antrieb (1) eine elektrische Maschine (3) und einen Stromrichter (2) aufweist, wobei die elektrische Maschine (3) mit einer Last (4) mechanisch über eine Welle (6) verbunden ist. Für den Fall, dass die Last (4) einen Momentenverlauf aufweist, der derart von der Drehzahl (n) abhängt, dass bei steigender Drehzahl (n) das Lastmoment zunimmt, wird zur Verbesserung des Wirkungsgrades und/oder des Schwingungs- und Geräuschverhaltens des elektrischen Antriebs (1) vorgeschlagen, in Abhängigkeit von der Drehzahl (n) des elektrischen Antriebs (1) die Magnetisierung der elektrischen Maschine (3) durch den Stromrichter (2) zu verändern. Weiter betrifft die Erfindung eine Regelvorrichtung (5), welche zur Durchführung eines solchen Verfahrens ausgebildet ist, sowie einen elektrischen Antrieb (1) mit einer elektrischen Maschine (3), einem Stromrichter (2) und einer solchen Regelvorrichtung (5).

## Beschreibung

Die Erfindung betrifft ein Verfahren zum Betreiben eines elektrischen Antriebs, wobei der Antrieb eine elektrische Maschine und einen Stromrichter aufweist und wobei die elektrische Maschine mit einer Last mechanisch über eine Welle verbunden ist. Die Erfindung betrifft weiter eine Regelvorrichtung, sowie einen elektrischen Antrieb.

Ein elektrischer Antrieb dient dazu, elektrische Energie in mechanische Energie umzusetzen. Mit einer vorhandenen Regelung oder Steuerung kann diese Umsetzung geregelt und/oder gesteuert erfolgen. In vielen Fällen umfasst der elektrische Antrieb dabei einen Stromrichter und eine elektrische Maschine. An die elektrische Maschine ist über eine Welle eine Last angekoppelt. Mithilfe des Stromrichters und einer Regelung wird die elektrische Maschine so gesteuert oder geregelt, dass die Last mit einem vorgebbaren Moment und einer vorgebbaren Drehzahl betrieben wird. Der Stromrichter stellt dazu in der elektrischen Maschine eine über die Drehzahl konstante Magnetisierung ein. Über einen momentbildenden Strom wird dann das Drehmoment an der elektrischen Maschine eingestellt. Dies verursacht in einzelnen Arbeitspunkten, beispielsweise bei verschiedenen Drehzahlen oder Drehzahlbereichen, einen schlechten Wirkungsgrad und/oder ein ungünstiges Geräusch- und Schwingungsverhalten. Teilweise sind sogar sehr hohe elektromagnetisch erzeugte Schwingungen und Geräusche im Drehzahlstellbereich des elektrischen Antriebs die Folge, wenn es zu Resonanzerscheinungen kommt. Bei zweipoligen elektrischen Maschinen stehen die elektromagnetisch erzeugten Schwingungen mit doppelter Speisefrequenz im Vordergrund. Trifft diese Frequenz, die eine magnetische Kraft im Motor verursacht, auf eine Motoreigenfrequenz, zum Beispiel die Ständergehäuseeigenfrequenz, können hohe Lagerbockschwingungen auftreten.

Bei dem Betrieb zweipoliger Asynchronmaschinen am Stromrichter ist es meist, bei entsprechend großem Drehzahlstellbereich, unvermeidbar, dass die elektromagnetische Anregung eine Eigenfrequenz des Gehäuses trifft. Die Folge sind erhöhte Lagerbockschwingungen. Dies ist der Grund, weshalb bei zweipolige Asynchronmaschinen oftmals nur die Schwingungen im Nennpunkt garantiert werden.

Bei den höherpoligen elektrischen Maschinen ergibt sich eine Geräuschproblematik. Auch elektromagnetisch erzeugte Schwingungen bei der Grundfrequenz, die aufgrund einer magnetischen Rotorexzentrizität auftreten können, werden durch die vorhandene Magnetisierung verstärkt.

Der Erfindung liegt die Aufgabe zu Grunde, ein Verfahren zum Betreiben eines elektrischen Antriebssystems anzugeben, das ein besseres Verhalten bezüglich Wirkungsgrad und/oder Geräusch- und Schwingungsverhalten aufweist.

Die Aufgabe wird durch ein Verfahren zum Betreiben eines elektrischen Antriebs gelöst, wobei der Antrieb eine elektrische Maschine und einen Stromrichter aufweist, wobei die elektrische Maschine mit einer Last mechanisch über eine Welle verbunden ist, wobei die Last einen Momentenverlauf aufweist der derart von der Drehzahl abhängt, dass bei steigender Drehzahl das Lastmoment zunimmt, wobei in Abhängigkeit von der Drehzahl des Antriebs die Magnetisierung der elektrischen Maschine durch den Stromrichter verändert wird. Die Aufgabe wird weiter durch eine Regelvorrichtung gelöst, welche zur Durchführung eines solchen Verfahrens ausgebildet ist. Ferner wird die Aufgabe durch einen elektrischen Antrieb, umfassend eine elektrische Maschine, einen Stromrichter und eine solche Regelvorrichtung gelöst.

Vorteilhafte Ausgestaltungen der Erfindung sind in den abhängigen Ansprüchen angegeben.

Der Erfindung liegt die Erkenntnis zu Grunde das sich eine deutliche Verbesserung hinsichtlich Wirkungsgrad und Schwingungs- und Geräuschverhalten dadurch erreichen lässt, indem im Drehzahlstellbereich die Magnetisierung der elektrischen Maschine entsprechend den Möglichkeiten (beispielsweise entsprechend dem Lastmoment) durch den Stromrichter angepasst wird. Bei geringerem Lastmoment bei kleinen Drehzahlen kann die Magnetisierung zur Verbesserung des Wirkungsgrades und/oder des Schwingungs- und Geräuschverhaltens abgesenkt werden. Dies wird dadurch möglich, dass die elektrische Maschine bei den entsprechend kleinen Drehzahlen nur ein geringeres Moment bereitstellen muss. Ein damit verbundener Verlust an mechanischer Leistung, bzw. mechanischen Moments, an der Welle macht sich aufgrund der Charakteristik der Last (Lastkennlinie) nicht bemerkbar.

Es hat sich darüber hinaus als sinnvoll erwiesen, zumindest abschnittsweise über einen Drehzahlbereich die Magnetisierung konstant zu halten.

Durch die Magnetisierungsanpassung über den Stromrichter im Drehzahlstellbereich bei zweipoligen Asynchronmaschinen kann die Schwingungsproblematik bezüglich der Gehäuseresonanzschwingungen im Drehzahlstellbereich extrem reduziert werden. Je nach Höhe der Magnetisierungsabsenkung, beispielsweise einer linearen Absenkung oder einer quadratischen Absenkung oder einer beliebigen Absenkung zwischen der linearen und der quadratischen Absenkung, kann die anregende Amplitude der magnetischen Rüttelkraft stark reduziert werden. Dabei ist die Höhe der Absenkung stromrichterseitig und motorseitig aufeinander abzustimmen.

Ein Betrieb in den Motorgehäuseresonanzen bzw. nahe der Motorgehäuseresonanzen mit der reduzierten Magnetisierung ist in besonders vorteilhafter Weise möglich. Damit kann der elektrische Antrieb, der Stromrichter und elektrische Maschine umfasst, schwingungstechnisch wie auch energetisch optimal eingestellt werden. Eine Anregung der Resonanzfrequenz kann dadurch verhindern oder zumindest soweit reduziert werden, dass hiervon eine geringere Geräusch- bzw. Schwingungsbelastung ausgeht.

Bei einer vorteilhaften Ausgestaltung der Erfindung wird die Magnetisierung derart verändert, dass die Magnetisierung der elektrischen Maschine zumindest bis zu einer Nenndrehzahl mit steigender Drehzahl des Antriebs steigt. Die Magnetisierung der elektrischen Maschine wird in dieser Ausgestaltung derart vorgegeben, dass die Funktion der Magnetisierung bis zu einer Nenndrehzahl in Abhängigkeit von der Drehzahl monoton wächst. Das bedeutet, dass zumindest bis zur Nenndrehzahl mit steigender Drehzahl die Magnetisierung wächst. Da oftmals mit sinkender Drehzahl auch das Lastmoment sinkt, hat es sich als sinnvoll erwiesen, in diesem Anwendungsfall mit sinkender Drehzahl die Magnetisierung der elektrischen Maschine entsprechend abzusenken. Dadurch lassen auf besonders einfache Weise Gewinne im Wirkungsgrad bei gleichzeitiger Geräuschreduktion erzielen. Für eine Geräuschreduktion hat es sich als besonders sinnvoll erwiesen, die Magnetisierung auf Werte abzusenken, die unterhalb einer Kennlinie liegen, die sich bei einem linearen Verlauf der Magnetisierung über der Drehzahl im Bereich zwischen Stillstand und Nenndrehzahl ergibt.

Darüber hinaus hat es sich als sinnvoll erwiesen, wenn oberhalb der Nenndrehzahl die Magnetisierung zumindest abschnittsweise über die Drehzahl konstant bleibt.

Bei einer weiteren vorteilhaften Ausgestaltung der Erfindung erfolgt die Magnetisierung der elektrischen Maschine unterhalb der Nenndrehzahl linear zur Drehzahl. Damit ergibt sich zumindest bis zur Nenndrehzahl eine lineare Abhängigkeit zwischen Magnetisierung und Drehzahl. Dabei hat es sich zum Anfahren als sinnvoll erwiesen, auch bei Drehzahl null ein Mindestwert an Magnetisierung in der elektrischen Maschine vorzusehen. Diese Art von Kennlinie ist auf besonders einfache Weise in der Regelung realisierbar, da nur die Magnetisierung bei Nenndrehzahl und bei Stillstand vorgegeben werden muss und die dazwischenliegenden Werte auf einfache Weise berechenbar sind. Eine Vorgabe falscher Parameter kann damit einfach erkannt und verhindert werden, so dass eine Fehlbedienung des elektrischen Antriebs sicher vermieden wird.

Bei einer weiteren vorteilhaften Ausgestaltung der Erfindung ist der elektrische Antrieb ein Mittelspannungsantrieb. Mittelspannungsantriebe weisen Spannungen größer 1000V auf. Mit ihnen lassen sich auf einfache Weise große Momente an der Welle der elektrischen Maschine realisieren, ohne dabei große elektrische Verluste in Stromrichter oder elektrischer Maschine zu verursachen. Aufgrund der hohen Leistungen wirkt sich eine Wirkungsgradverbesserung im besonderen Maße auf die elektrischen Verluste aus. Somit ist durch die Anwendung des Verfahrens für Mittelspannungsantriebe besonders wirtschaftlich. Ebenso reduziert die Reduktion von Schwingungen im elektrischen Antrieb die Belastung von mechanischen Komponenten. Diese sind damit teilweise deutlich kostengünstiger, da sie für geringere Beanspruchung ausgelegt werden können.

Bei einer weiteren vorteilhaften Ausgestaltung der Erfindung ist die Last ein Lüfter oder Kompressor. Eine Vielzahl zweipoliger elektrischer Maschinen, die von einem Stromrichter gespeist werden, treiben einen Lüfter oder einen Kompressor an. Hier hat die Last einen Momentenverlauf, der quadratisch von der Drehzahl abhängt. Mit steigender Drehzahl steigt das Lastmoment quadratisch. Daher kann bei geringerer Drehzahl als der Nenndrehzahl die Magnetisierung zurückgenommen werden. Insbesondere eine lineare Reduktion der Magnetisierung hat sich als vorteilhaft erwiesen. Dies kann am Stromrichter durch entsprechendes Stellen der Spannung erfolgen. Da die Anregung der magnetischen Kraftkomponente, die der doppelten Speisefrequenz entspricht, quadratisch zur Luftspaltinduktion auftritt, kann bei geringer Drehzahl die anregende magnetische Kraftkomponente dann deutlich reduziert werden, und die Problematik des Betriebs in oder nahe der Gehäuseresonanz wird deutlich entschärft. Mit einer linearen Absenkung der Magnetisierung lässt sich damit die Schwingungsamplitude aufgrund der magnetischen Rüttelkraft um den Faktor 2,25 reduzieren.

Im Folgenden wird die Erfindung anhand der in den Figuren dargestellten Ausführungsbeispiele näher beschrieben und erläutert. Es zeigen:
- FIG 1: einen elektrischen Antrieb mit einer Last und
- FIG 2: einen Verlauf der Magnetisierung über die Drehzahl.

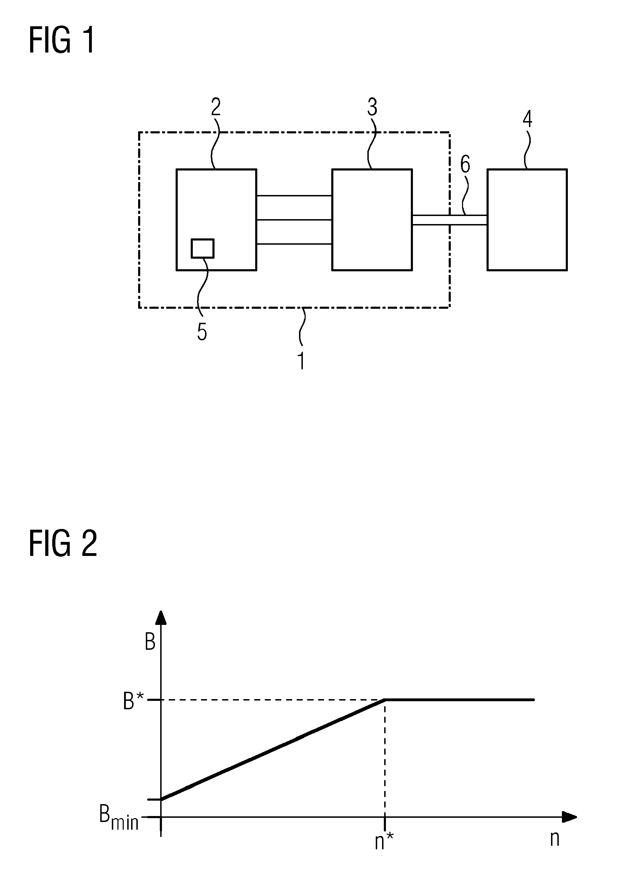

FIG 1 zeigt einen elektrischen Antrieb 1, der über eine Welle 6 mit einer Last 4 verbunden ist. Der elektrische Antrieb 1 weist einen Stromrichter 2 und eine elektrische Maschine 3 auf. Der Stromrichter 2 ist in diesem Ausführungsbeispiel mit der elektrischen Maschine 3 dreiphasig verbunden. Dies ist insbesondere dann der Fall, wenn es sich bei der elektrischen Maschine 3 um eine Asynchronmaschine oder eine Synchronmaschine handelt. Die Verbindung des Stromrichters 2 mit einem Energieversorgungsnetz, aus dem elektrische Energie für den elektrischen Antrieb 1 bezogen wird, ist hier zur Vereinfachung nicht dargestellt. Die elektrische Maschine 3 treibt über die Welle 6 die Last 4 an. Um den elektrischen Antrieb 1 regeln oder steuern zu können, weist der Stromrichter 2 vorteilhafterweise eine Regelvorrichtung 5 auf. In der Regelvorrichtung 5 kann eine Kennlinie hinterlegt werden, die angibt, bei welcher Drehzahl n die elektrische Maschine 3 mit welcher Magnetisierung B betrieben wird. Die Magnetisierung B der elektrischen Maschine 3 kann über die Spannung an den elektrischen Verbindungen zwischen Stromrichter 2 und elektrischer Maschine 3 eingestellt werden.

Ein Beispiel, wie die Magnetisierung B der elektrischen Maschine 3 in Abhängigkeit von der Drehzahl n verändert wird, zeigt FIG 2. Oberhalb der Nenndrehzahl n* ist die Magnetisierung B mit einem Wert B* konstant. Unterhalb der Nenndrehzahl n* steigt die Magnetisierung B mit steigender Drehzahl n linear an. Bei der Drehzahl null, auch als Stillstand bezeichnet, ist in der elektrischen Maschine 3 eine minimale Magnetisierung Bₘᵢₙ vorhanden. Zwischen der Drehzahl null und der Nenndrehzahl n* steigt die Magnetisierung B linear, d.h. in Form einer Geraden, an. Neben dem linearen Verlauf sind auch andere Funktionen der Magnetisierung B in Abhängigkeit von der Drehzahl n realisierbar. Zur Erreichung einer besonders geringen Geräuschemission haben sich auch Werte unterhalb der dargestellten Geraden im Bereich zwischen Stillstand und Nenndrehzahl als vorteilhaft erwiesen. Als besonders vorteilhaft hat es sich erwiesen, wenn die Magnetisierung B zumindest unterhalb der Nenndrehzahl n* mit steigender Drehzahl n monoton wächst. Damit sind auch Drehzahlbereiche unterhalb der Nenndrehzahl n* realisierbar, in denen die Magnetisierung B konstant bleibt.

Zusammenfassend betrifft die Erfindung ein Verfahren zum Betreiben eines elektrischen Antriebs, wobei der elektrische Antrieb eine elektrische Maschine und einen Stromrichter aufweist, wobei die elektrische Maschine mit einer Last mechanisch über eine Welle verbunden ist. Für den Fall, dass die Last einen Momentenverlauf aufweist, der derart von der Drehzahl abhängt, dass bei steigender Drehzahl das Lastmoment zunimmt, wird zur Verbesserung des Wirkungsgrades und/oder des Schwingungs- und Geräuschverhaltens des elektrischen Antriebs vorgeschlagen, in Abhängigkeit von der Drehzahl des elektrischen Antriebs die Magnetisierung der elektrischen Maschine durch den Stromrichter zu verändern. Weiter betrifft die Erfindung eine Regelvorrichtung, welche zur Durchführung eines solchen Verfahrens ausgebildet ist, sowie einen elektrischen Antrieb mit einer elektrischen Maschine, einem Stromrichter und einer solchen Regelvorrichtung.

## Patentansprüche

1. Verfahren zum Betreiben eines elektrischen Antriebs (1), wobei der elektrische Antrieb (1) eine elektrische Maschine (3) und einen Stromrichter (2) aufweist, wobei die elektrische Maschine (3) mit einer Last (4) mechanisch über eine Welle (6) verbunden ist, wobei die Last (4) einen Momentenverlauf aufweist, der derart von der Drehzahl (n) abhängt, dass bei steigender Drehzahl (n) das Lastmoment (M) zunimmt, wobei in Abhängigkeit von der Drehzahl (n) des elektrischen Antriebs (1) die Magnetisierung der elektrischen Maschine (3) durch den Stromrichter (2) verändert wird.

2. Verfahren nach Anspruch 1, wobei die Magnetisierung derart verändert wird, dass die Magnetisierung der elektrischen Maschine (3) zumindest bis zu einer Nenndrehzahl (n*) mit steigender Drehzahl (n) des elektrischen Antriebs (1) steigt.

3. Verfahren nach einem der Ansprüche 1 oder 2, wobei die Magnetisierung der elektrischen Maschine (3) unterhalb der Nenndrehzahl (n*) linear zur Drehzahl (n) erfolgt.

4. Verfahren nach einem der Ansprüche 1 bis 3, wobei der elektrische Antrieb (1) ein Mittelspannungsantrieb ist.

5. Verfahren nach einem der Ansprüche 1 bis 4, wobei die Last (4) ein Lüfter oder Kompressor ist.

6. Regelvorrichtung (5), welche zur Durchführung des Verfahrens nach einem der Ansprüche 1 bis 5 ausgebildet ist.

7. Elektrischer Antrieb (1), umfassend
- eine elektrische Maschine (3),
- einen Stromrichter (2) und
- eine Regelvorrichtung (5) nach Anspruch 6.
